# EUROPÄISCHE PATENTANMELDUNG

(11) **EP 3 086 434 A1**
(43) Veröffentlichungstag der Anmeldung: **26.10.2016**
(21) Anmeldenummer: 15165010.8
(22) Anmeldetag: 24.04.2015
(51) Int. Cl.: H02J 7/00, B25F 5/02

(54) **NETZBETREIBBARES AKKU-LADEGERÄT, LADESYSTEM UND HANDWERKZEUGMASCHINE**

(71) Anmelder: HILTI Aktiengesellschaft, 9494 Schaan (LI)
(72) Erfinder: Hunger, Markus, 86161 Augsburg (DE)
(74) Vertreter: Hilti Aktiengesellschaft Corporate Intellectual Property

(57) **Zusammenfassung**

Netzbetriebenes Akku-Ladegerät (100) mit einem Ladergehäuse (90), das eine zum Anschluss eines Haupt-Werkzeugakkus (10) einer Handwerkzeugmaschine (1000) ausgebildete Hauptladeschnittstelle (11) aufweist, die an einer Anschlussseite (95) des Ladergehäuse (90) angeordnet ist, wobei das Akku-Ladegerät (100) wenigstens eine auf der Anschlussseite (95) des Ladergehäuse (90) angeordnete Nebenladeschnittstelle (21, 31) aufweist, die derart zwischen einer Ladestellung (N) und einer Ruhestellung (N') verlagerbar ausgebildet ist, dass ein Neben-Werkzeugakku an der Nebenladeschnittstelle (21, 31) anschließbar ist, wenn sich die Nebenladeschnittstelle (21, 31) in der Ladestellung (N) befindet.

## Beschreibung

Die vorliegende Erfindung betrifft ein netzbetreibbares Akku-Ladegerät mit einem Ladergehäuse, das eine zum Anschluss eines Haupt-Werkzeugakkus einer Handwerkzeugmaschine ausgebildete Hauptladeschnittstelle aufweist, die an einer Anschlussseite des Ladergehäuses angeordnet ist. Die vorliegende Erfindung betrifft ebenfalls ein Ladesystem mit einem netzbetreibbaren Akku-Ladegerät und einem Haupt-Werkzeugakku. Des Weiteren betrifft die vorliegende Erfindung eine Handwerkzeugmaschine, insbesondere Bohrhammer oder Kombihammer, mit einem Werkzeuggehäuse in dessen Akku-Aufnahmebucht eine zum Anschluss eines Haupt-Werkzeugakkus ausgebildete Hauptversorgungsschnittstelle angeordnet ist.

Es ist Aufgabe der vorliegenden Erfindung, ein netzbetreibbares Akku-Ladegerät, ein Ladesystem sowie eine Handwerkzeugmaschine anzugeben, die vielseitig einsetzbar sind. Bezüglich des Akku-Ladegeräts wird die Aufgabe dadurch gelöst, dass das Akku-Ladegerät wenigstens eine auf der Anschlussseite des Ladergehäuses angeordnete Nebenladeschnittstelle aufweist, die derart zwischen einer Ladestellung und einer Ruhestellung verlagerbar ausgebildet ist, dass ein Neben-Werkzeugakku an der Nebenladeschnittstelle anschließbar ist, wenn sich die Nebenladeschnittstelle in einer Ladestellung befindet.

Haupt-Werkzeugakku und Neben-Werkzeugakku können verschiedenen Typs sein, insbesondere können Haupt-Werkzeugakku und Neben-Werkzeugakku zum Betrieb von Handwerkzeugmaschinen verschiedenen Typs ausgebildet und/oder bestimmt sein.

Die Erfindung schließt die Erkenntnis ein, dass Haupt-Werkzeugakkus und Neben-Werkzeugakkus, insbesondere, wenn sie verschiedenen Typs sind, bisher nicht über ein und dasselbe Akku-Ladegerät geladen werden konnten. So ist es beispielsweise mit Akku-Ladegeräten des Standes der Technik unmöglich, sowohl einen Haupt-Werkzeugakku einer neuen Generation als auch einen Neben-Werkzeugakku einer älteren Generation an ein und derselben Anschlussseite des Akku-Ladegeräts zu laden, da diese typischerweise mechanisch verschieden kodiert sind bzw. mechanisch unterschiedliche Ausführungen aufweisen, die inkompatible zueinander sind. Durch das erfindungsgemäße netzbetreibbare Akku-Ladegerät kann nun vorteilhafterweise an der Nebenladeschnittstelle ein Neben-Werkzeugakku geladen werden, wobei die Nebenladeschnittstelle zwischen der Ladestellung und der Ruhestellung verlagerbar ist. Dies hat den Vorteil, dass an ein und derselben Anschlussseite des Ladergehäuses Akkus verschiedenen Typs geladen werden können, wodurch das Akku-Ladegerät vielseitig einsetzbar ist.

In einer bevorzugten Ausgestaltung ist die Hauptladeschnittstelle mechanisch gegen den Anschluss des Haupt-Werkzeugakkus gesperrt, wenn sich die Nebenladeschnittstelle in der Ladestellung befindet. Somit kann bereits wirksam ein Laden eines nicht zum Anschluss an die Nebenladeschnittstelle geeigneten Akkutyps verhindert werden, wodurch das Akku-Ladegerät besonders sicher betreibbar ist.

Alternativ oder zusätzlich kann die Hauptladeschnittstelle mechanisch zum Anschluss des Werkzeugakkus freigegeben sein, wenn sich die Nebenladeschnittstelle in der Ruhestellung befindet. Bevorzugt ist die Nebenladeschnittstelle mechanisch gegen den Anschluss des Neben-Werkzeugakkus gesperrt, wenn sich die Nebenladeschnittstelle in der Ruhestellung befindet. Mit anderen Worten ist das netzbetreibbare Akku-Ladegerät bevorzugt derart ausgestaltet, dass an der Anschlussseite des Ladergehäuses entweder nur ein Haupt-Werkzeugakku oder aber ein Neben-Werkzeugakku anschließbar und/oder aufladbar ist.

In einer besonders bevorzugten Ausgestaltung ist die Hauptladeschnittstelle als Ladebuchse ausgebildet (weibliche Ausführung). Die Nebenladeschnittstelle kann als zwischen der Ladestellung und der Ruhestellung verschiebbares Schwert ausgebildet sein, welches in der Ladestellung von der Anschlussseite des Ladergehäuses abragt (männliche Ausführung). Bevorzugt ist die als verschiebbares Schwert ausgebildete Nebenladestelle in ihrer Ruhestellung im Wesentlichen flächenbündig mit der Anschlussseite des Ladergehäuses oder jedenfalls nicht von diesem abragend. Bevorzugt weist das Akku-Ladegerät eine Ladeelektronik auf, die innerhalb des Ladergehäuses angeordnet und ausgebildet ist, den über den Hauptladeschnittstelle anzuschließenden Haupt-Werkzeugakku mit einer Haupt-Ladekonfiguration zu laden.

Die Ladeelektronik kann ebenfalls ausgebildet sein, den über die Nebenladeschnittstelle anzuschließenden Neben-Werkzeugakku mit einer Neben-Ladekonfiguration zu laden. Eine jeweilige Ladekonfiguration weist bevorzugt eine vorbestimmte Stromstärke, eine maximale Ladungsmenge und/oder weitere Ladeparameter auf. So kann die Ladeelektronik beispielsweise dafür eingerichtet sein, einen Haupt-Werkzeugakku mit einer Nennspannung von 36 Volt zu laden und/oder einen Neben-Werkzeugakku mit einer Nennspannung von 14 Volt oder 22 Volt zu laden. Andere Spannungskonfigurationen sind möglich.

Bevorzugt ist die Nebenladeschnittstelle elektrisch mit der gleichen Elektronik wie die Hauptladeschnittstelle verbunden. Somit ergibt sich ein besonders einfacher und günstiger Aufbau des Akku-Ladegeräts.

In einer besonders bevorzugten Ausgestaltung weist das Akku-Ladegerät wenigstens einen Sensor auf, der ausgebildet und angeordnet ist zu sensieren, ob die Nebenladeschnittstelle in der Ladestellung oder der Ruhestellung befindlich ist. Der Sensor kann beispielsweise ein optischer oder mechanischer Sensor sein, der bevorzugt in der Nähe der Anschlussseite des Ladergehäuses angeordnet ist. Mehrere Sensoren können vorgesehen sein.

Im Sinne einer erhöhten Bediensicherheit, aber auch eines erhöhten Bedienkomforts, hat es sich als vorteilhaft herausgestellt, wenn die Ladeelektronik ausgebildet ist, die Ladekonfigurationen in Abhängigkeit eines Sensorwertes des Sensors umzuschalten. Die Nebenladeschnittstelle kann beispielsweise ausgebildet sein, mittels eines manuell betätigbaren Schiebers zwischen der Ladestellung und der Ruhestellung verschiebbar zu sein. Der Sensor kann beispielsweise mechanisch an den Schieber angekoppelt sein, sodass eine für den Haupt-Werkzeugakku bestimmte Ladekonfiguration aktiviert wird, wenn die Nebenladeschnittstelle in der Ruhestellung ist. Andererseits kann beispielsweise eine für die Ladung des Neben-Werkzeugakkus bestimmte Ladekonfiguration aktiviert sein, wenn sich die Nebenladeschnittstelle, sensiert durch den Sensor, in der Ladestellung befindet.

Bevorzugt sind die zur Aufnahme des Haupt-Werkzeugakkus ausgebildete Hauptladeschnittstelle und die mit einem Neben-Werkzeugakku verbindbare Nebenladeschnittstelle mechanisch verschieden voneinander kodiert, wobei Haupt-Werkzeugakku und Neben-Werkzeugakku bevorzugt verschiedenen Typs sind.

Bevorzugt weist der Haupt-Werkzeugakku eine zur Hauptladeschnittstelle korrespondierende Hauptakkuschnittstelle auf. Des Weiteren bevorzugt weist der Neben-Werkzeugakku eine zur Nebenladeschnittstelle des Akku-Ladegeräts korrespondierende Nebenakkuschnittstelle auf. Das Akku-Ladegerät kann eine, zwei, oder mehrere Nebenladeschnittstellen aufweisen. Bevorzugt weist das Akku-Ladegerät genau eine Nebenladeschnittstelle auf. Das Akku-Ladegerät kann genau zwei Nebenladeschnittstellen aufweisen.

Bezüglich des Ladesystems wird die Aufgabe gelöst durch ein vorbeschriebenes netzbetreibbares Akku-Ladegerät und wenigstens einem Haupt-Werkzeugakku zu dessen Anschluss die Hauptladeschnittstelle des netzbetreibbaren Akku-Ladegeräts ausgebildet ist und /oder mit wenigstens einem Neben-Werkzeugakku zu dessen Anschluss die Nebenladeschnittstelle ausgebildet ist.

Bezüglich der Handwerkzeugmaschine wird die Aufgabe dadurch gelöst, dass in der Aufnahmebucht eine zum bedarfsweisen Anschließen eines Neben-Werkzeugakkus ausgebildete Nebenversorgungsschnittstelle angeordnet ist, die derart zwischen einer Versorgungsstellung und einer Ruhestellung verlagerbar ausgebildet ist, dass der Neben-Werkzeugakku an der Nebenversorgungsschnittstelle anschließbar ist, wenn sich die Nebenversorgungsschnittstelle in der Versorgungsstellung befindet. Die erfindungsgemäße Handwerkzeugmaschine kann in entsprechender Weise zu dem vorbeschriebenen Akku-Ladegerät weitergebildet sein. Beispielsweise ist die Nebenversorgungsschnittstelle bevorzugt als Ladebuchse ausgebildet, sodass eine Nebenladeschnittstelle des Akku-Ladegeräts, die als verschiebbares Schwert ausgebildet ist, in diese Ladebuchse einführbar ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung eines netzbetreibbaren Akku-Ladegeräts gemäß des Standes der Technik;
- Fig. 2: eine schematische Darstellung eines ersten Ausführungsbeispiels eines erfindungsgemäßen netzbetreibbaren Akku-Ladegeräts;
- Fig. 3: eine schematische Darstellung des Akku-Ladegeräts aus Fig. 2 an dem ein Haupt-Werkzeugakku anzuschließen ist;
- Fig. 4: eine schematische Darstellung des Akku-Ladegeräts aus Fig. 2 an dem ein Neben-Werkzeugakku anzuschließen ist;
- Fig. 5: eine schematische Darstellung eines zweiten Ausführungsbeispiels eines erfindungsgemäßen netzbetreibbaren Akku-Ladegeräts in Schnittdarstellung;
- Fig. 6: eine schematische Darstellung des Akku-Ladegeräts aus Fig. 5 an dem ein Haupt-Werkzeugakku anzuschließen ist;
- Fig. 7: eine schematische Darstellung des Akku-Ladegeräts aus Fig. 5 an dem ein erster Neben-Werkzeugakku anzuschließen ist;
- Fig. 8: eine schematische Darstellung des Akku-Ladegeräts aus Fig. 5 an dem ein zweiter Neben-Werkzeugakku anzuschließen ist; und
- Fig. 9: eine schematische Darstellung einer erfindungsgemäßen Handwerkzeugmaschine.

### Ausführungsbeispiele:

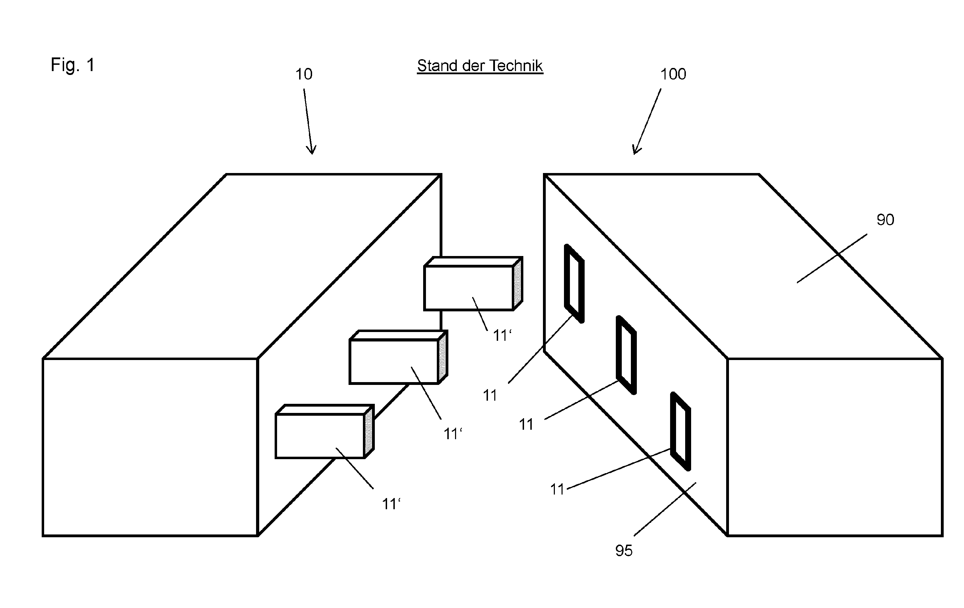

Fig. 1 zeigt auf seiner rechten Seite ein netzbetreibbares Akku-Ladegerät 100 gemäß des Standes der Technik. Das Akku-Ladegerät 100 weist ein Ladergehäuse 90 auf, dass eine zum Anschluss eines auf der linken Seite gezeigten Haupt-Werkzeugakkus 10 ausgebildete Hauptladeschnittstelle 11 aufweist. Im dargestellten Ausführungsbeispiel ist die Hauptladeschnittstelle 11 in Form von drei Ladebuchsen ausgebildet, die an einer Anschlussseite 95 des Ladergehäuses angeordnet sind.

Der Haupt-Werkzeugakku 10 auf der linken Seite der Fig. 1 weist eine Hauptakkuschnittstelle 11' auf, die zur Hauptladeschnittstelle 11 des Akku-Ladegeräts 100 korrespondiert und im vorliegenden Beispiel durch drei starr von einer Oberfläche des Haupt-Werkzeugakkus 10 abragende Schwerter ausgebildet ist. Zum Anschließen des Haupt-Werkzeugakkus 10 an das Akku-Ladegerät 100 des Standes der Technik wird die Hauptakkuschnittstelle 11' in die korrespondierende Hauptladeschnittstelle 11 des Akku-Ladegeräts eingeschoben.

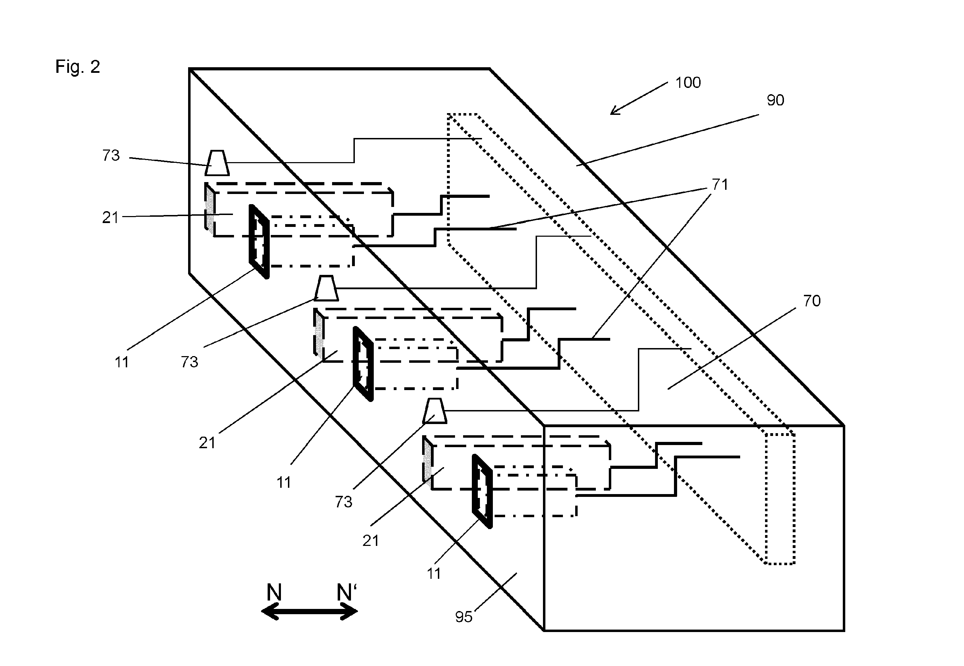

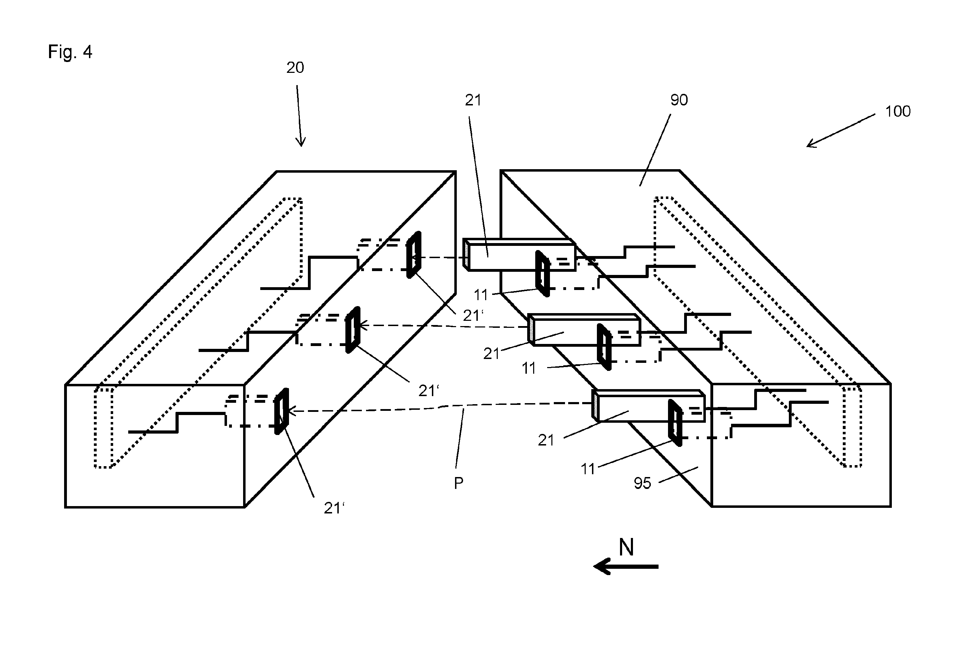

Ein erfindungsgemäßes Akku-Ladegerät 100 in Fig. 2 weist zusätzlich zu der Hauptladeschnittstelle 11, die an der Anschlussseite 95 des Ladergehäuses 90 in Form von drei Ladebuchsen bereitgestellt ist, eine Nebenladeschnittstelle 21 auf. Diese Nebenladeschnittstelle 21 ist ebenfalls an der Anschlussseite 95 des Ladergehäuses angeordnet. Im dargestellten Ausführungsbeispiel ist die Nebenladeschnittstelle 21 durch drei verschiebbare Schwerter bereitgestellt. Die Nebenladeschnittstelle 21 in Form der drei Schwerter ist zwischen einer Ladestellung N und einer Ruhestellung N' verlagerbar, genauer gesagt verschiebbar ausgebildet. In Fig. 2 ist die Ruhestellung N' der Nebenladeschnittstelle dargestellt, in der die drei Schwerter im Wesentlichen flächenbündig zur Anschlussseite 95 des Ladergehäuses 90 befindlich ist. Bezüglich der Ladestellung N der Nebenladeschnittstelle 21 sei auf Fig. 4 verwiesen.

Wie ebenfalls aus Fig. 2 ersichtlich ist, weist das Akku-Ladegerät 100 eine Ladeelektronik 70 auf, die innerhalb des Ladergehäuses angeordnet ist. Die Ladeelektronik 70 ist über jeweilige Verbindungskabel 71 sowohl mit der Hauptladeschnittstelle 11 als auch der Nebenladeschnittstelle 21 verbunden.

Im vorliegenden Ausführungsbeispiel weist das Akku-Ladegerät 100 drei Sensoren 73 auf, die ausgebildet und angeordnet sind zu sensieren, ob die Nebenladeschnittstelle 21 in Form der drei ausschiebbaren Schwerter in der Ladestellung N oder der Ruhestellung N' befindlich ist. In der Darstellung der Fig. 2 ist die Nebenladeschnittstelle in der Ruhestellung N' befindlich, genauer gesagt sind die drei verschiebbaren Schwerter innerhalb eines Volumens 90 angeordnet, sodass diese nicht von der Anschlussseite 95 abragen. Dies ist durch die gestrichelte Darstellung der Nebenladeschnittstelle 21 angedeutet. Im Gegensatz dazu ist die Hauptladeschnittstelle 11 in Form der drei Ladebuchsen nicht verschiebbar im Ladergehäuse 90 beziehungsweise an dessen Anschlussseite 95 angeordnet, was durch die Strichpunktlinierung symbolisiert ist.

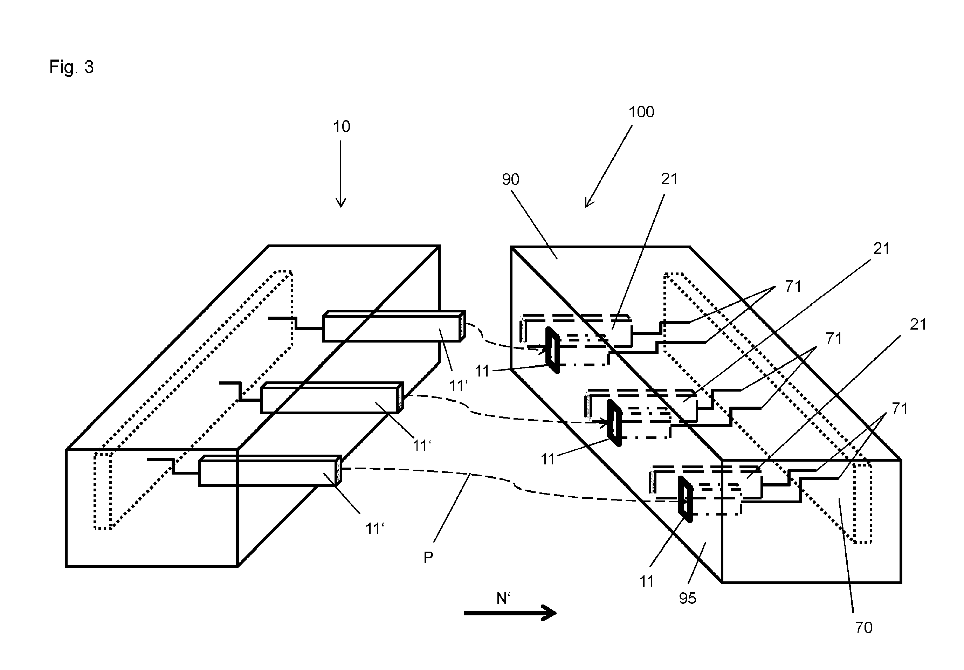

In Fig. 3 ist dargestellt, wie ein Haupt-Werkzeugakku 10 entlang eines Bewegungspfades P an dem Akku-Ladegerät 100 angeschlossen wird. Dadurch, dass die Nebenladeschnittstelle 21 in der Ruhestellung N' befindlich ist, ist die Anschlussseite 95 zum Anschluss des Haupt-Werkzeugakkus 10 freigegeben. Mit anderen Worten kann dadurch, dass die als drei Schwerter ausgebildete Nebenladeschnittstelle 21 nicht von der Anschlussseite 95 des Ladergehäuses 90 abragt, der Haupt-Werkzeugakku 10 mit seinen als drei Schwerter ausgebildeten Hauptakkuschnittstelle 11' in die korrespondierenden und als drei Ladebuchsen ausgebildete Hauptladeschnittstelle 11 eingeschoben werden.

Fig. 4 zeigt nunmehr den Fall, in dem ein Neben-Werkzeugakku 20, der von einem Haupt-Werkzeugakku 10 (vgl. Fig. 3) verschiedentlich mechanisch kodiert ist an dem Akku-Ladegerät 100 angeschlossen wird. Im dargestellten Ausführungsbeispiel weist der Neben-Werkzeugakku 20 eine Nebenakkuschnittstelle 21' auf, die wie gezeigt als starr an einer Oberfläche des Neben-Werkzeugakkus 20 angeordnete Buchsen ausgebildet ist. Im vorliegenden Fall sind genau drei Buchsen ausgebildet.

Auf der rechten Seite der Fig. 4 ist das Akku-Ladegerät 100 dargestellt, wobei sich die Nebenladeschnittstelle 21 in der Ladestellung N befindet. Wie ersichtlich, ragen die drei verschiebbaren Schwerter, die die Nebenladeschnittstelle 21 des Akku-Ladegeräts 100 bilden, von der Anschlussseite 95 des Ladergehäuses 90 ab. Dadurch ist der Neben-Werkzeugakku 20 mit seiner korrespondierenden Nebenakkuschnittstelle 21' an der Nebenladeschnittstelle 21 anschließbar. Gleichermaßen ist dadurch, dass die Nebenladeschnittstelle 21 in Form der drei verschiebbaren Schwerter von der Anschlussseite 95 des Ladergehäuses 90 abragen, die Hauptladeschnittstelle 11 mechanisch gegen den Anschluss des Haupt-Werkzeugakkus 10 (vgl. Fig. 3) gesperrt.

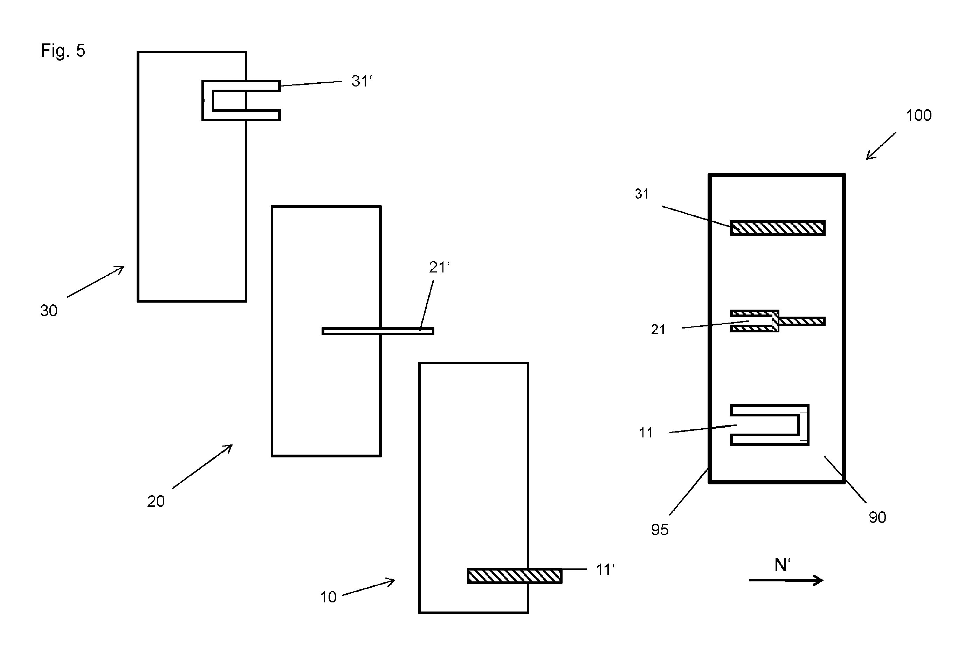

Fig. 5 zeigt schematisch eine Schnittdarstellung und Draufsicht auf ein zweites Ausführungsbeispiel eines erfindungsgemäßen Akku-Ladegeräts 100. Das Akku-Ladegerät 100 weist eine Hauptladeschnittstelle 11 sowie eine erste Nebenladeschnittstelle 21 und eine zweite Nebenladeschnittstelle 31 auf. Vorliegend sind sowohl die Hauptladeschnittstelle 11 als auch die Nebenladeschnittstelle 21, 31 zwischen einer Ladestellung N (nicht dargestellt) und einer Ruhestellung N' (dargestellt) verschiebbar.

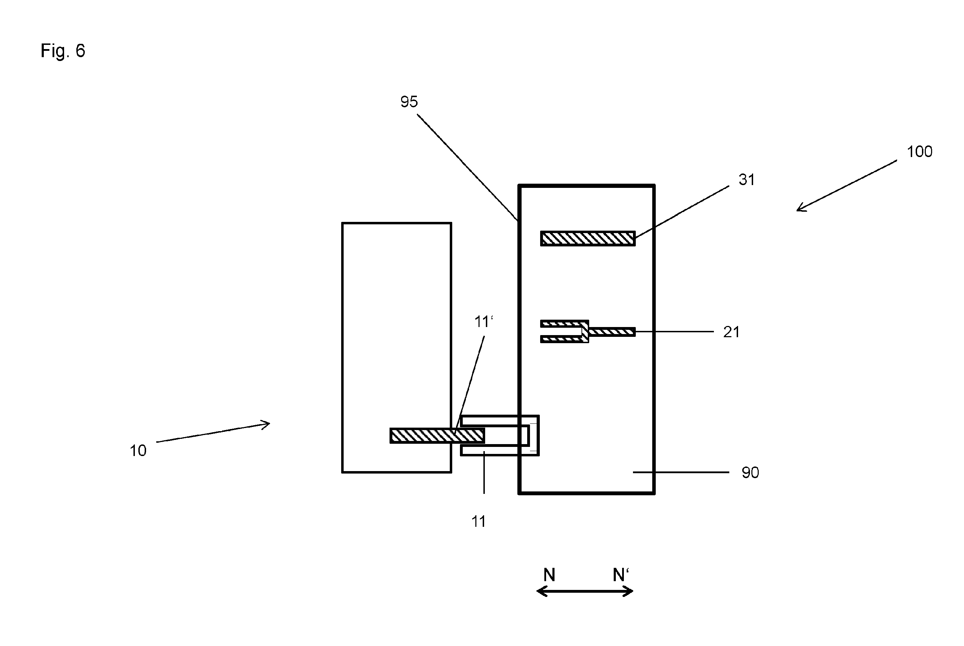

Wie aus Fig. 6 ersichtlich ist, ist die Hauptladeschnittstelle 11 vorliegend als verschiebbare Ladebuchse ausgebildet und in Fig. 6 in Ladestellung N dargestellt. Somit kann ein Haupt-Werkzeugakku 10, der eine als starres Schwert ausgebildete Hauptakkuschnittstelle 11' aufweist an dem Akku-Ladegerät 100 angeschlossen und dementsprechend geladen werden.

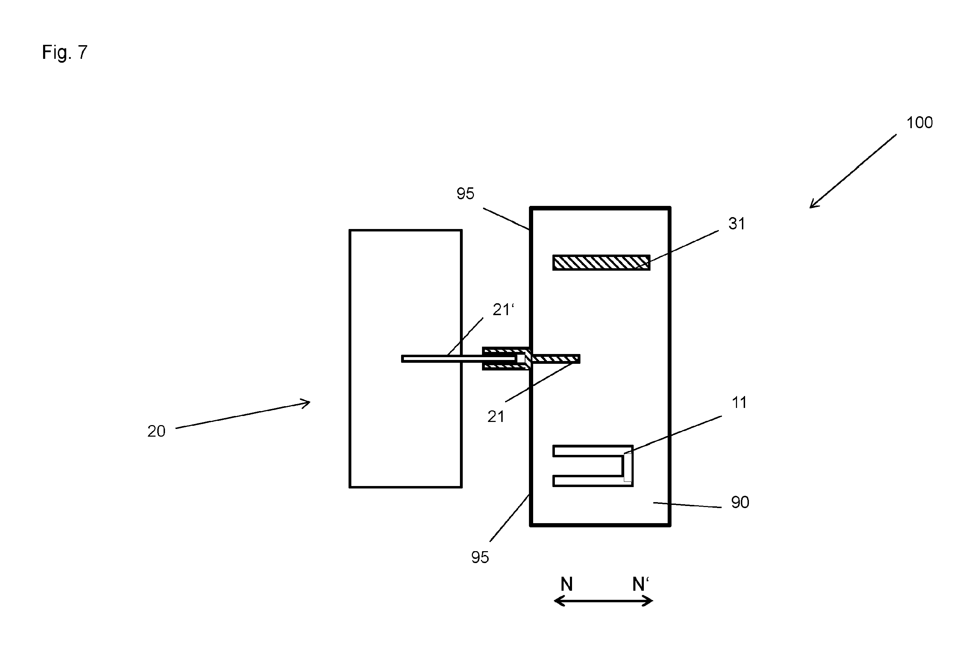

In Fig. 7 ist die soeben mit Bezug auf Fig. 6 beschriebene Hauptladeschnittstelle 11 in einer Ruhestellung N' dargestellt, das heißt sie ist innerhalb des Ladergehäuses 90 angeordnet beziehungsweise ragt jedenfalls nicht von der Anschlussseite 95 ab. Eine als verschiebbare Ladebuchse ausgebildete erste Nebenladeschnittstelle 21 ist in Fig. 7 in Ladestellung N gezeigt, sodass ein erster Neben-Werkzeugakku 20, der eine erste Nebenakkuschnittstelle 21' in Form eines zu der ersten Nebenladeschnittstelle 21 korrespondierenden Schwertes aufweist, an dem Akku-Ladegerät 100 anschließbar ist und geladen werden kann.

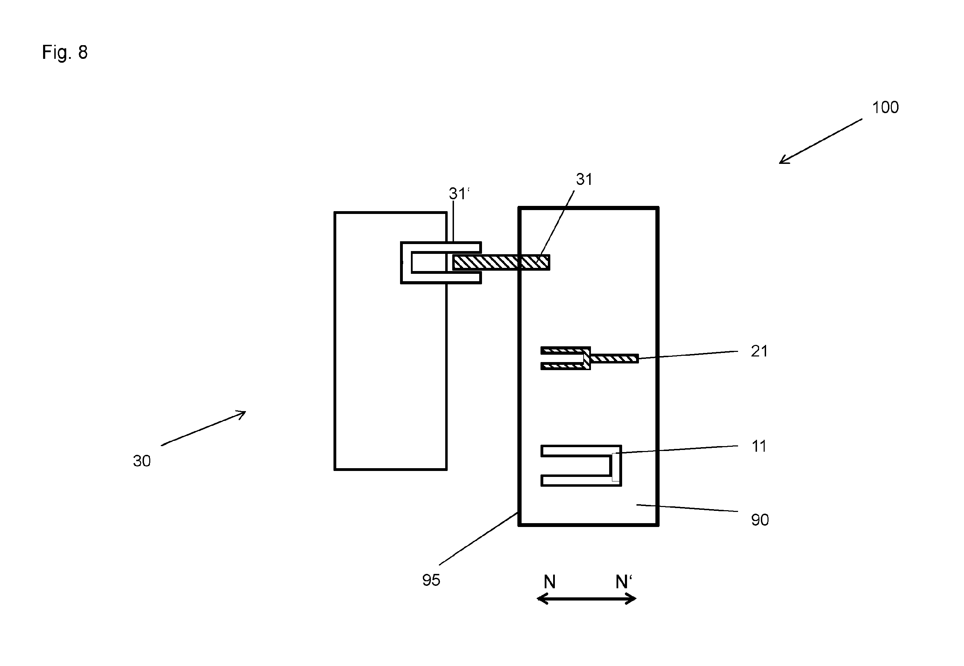

Fig. 8 wiederum zeigt das Akku-Ladegerät 100, wobei eine zweite Nebenladeschnittstelle 31, die im vorliegenden Beispiel als verschiebbares Schwert ausgebildet ist, in Ladestellung N befindlich ist und dementsprechend von der Anschlussseite 95 des Ladergehäuses 90 abragt. Somit ist ein zweiter Neben-Werkzeugakku 30 mit einer zweiten Nebenakkuschnittstelle 31' am Akku-Ladegerät 100 anschließbar und ladbar. Gleichermaßen ist dadurch, dass die zweite Nebenladeschnittstelle 31 in Form des Schwerts von der Anschlussseite 95 des Ladergehäuses 95 abragt, ein Anschluss des Haupt-Werkzeugakkus 10 der Fig. 6 oder des ersten Neben-Werkzeugakkus 20 der Fig. 7 am Akku-Ladegerät 100 der Fig. 8 mechanisch gesperrt.

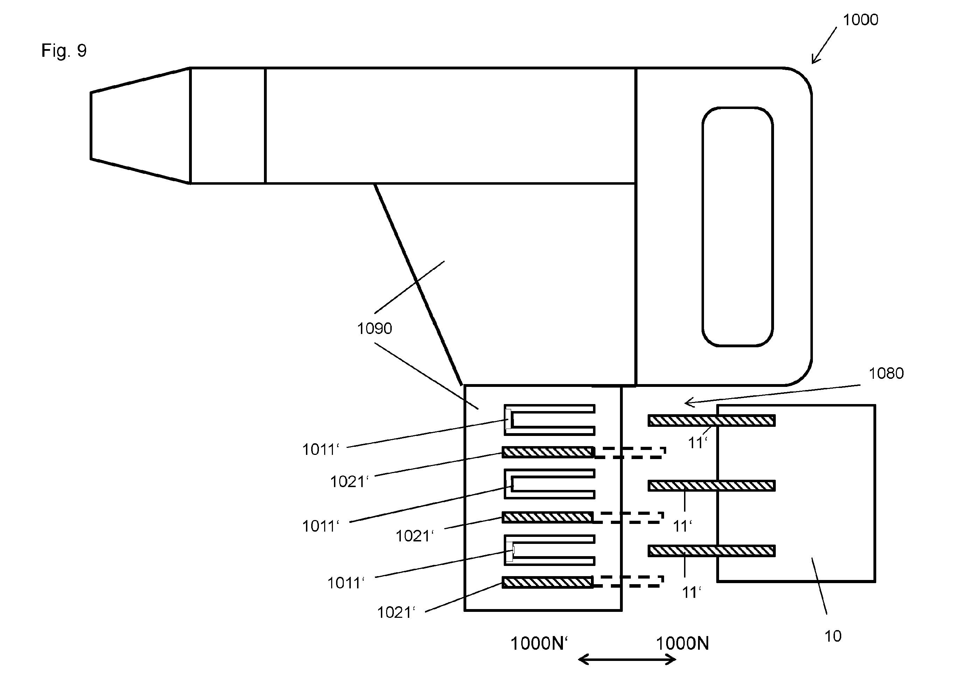

Fig. 9 zeigt eine erfindungsgemäße Handwerkzeugmaschine 1000 in Form eines Bohrhammers. Die Handwerkzeugmaschine 1000 weist ein Werkzeuggehäuse 1090 auf, in dessen Akku-Aufnahmebucht 1080 eine zum Anschluss eines Haupt-Werkzeugakkus 10 ausgebildete Hauptversorgungsschnittstelle 1011' in Form dreier Anschlussbuchsen angeordnet ist. Die in Form von drei Anschlussbuchsen bereitgestellte Hauptversorgungsschnittstelle 1011' korrespondiert zu einer Hauptakkuschnittstelle 11', die als vom Haupt-Akku 10 starr abragende drei Schwerter bereitgestellt ist.

In der Aufnahmebucht 1080 ist eine zum bedarfsweisen Anschließen eines Neben-Werkzeugakkus (nicht gezeigt) ausgebildete Nebenversorgungsschnittstelle 1021' angeordnet, die zwischen einer Versorgungsstellung 1000N (gestrichelt dargestellt) und einer Ruhestellung 1000N' (mittels durchgezogener Linie dargestellt) verlagerbar ausgebildet ist. Da sich die Nebenversorgungsschnittstelle 1021' wie dargestellt in der Ruhestellung 1000N', das heißt in zurückgezogener Stellung befindet, ist der Haupt-Werkzeugakku 10 an der Hauptversorgungsschnittstelle 1010 anschließbar. Dies wäre nicht der Fall, wenn sich die Nebenversorgungsschnittstelle 1021' in Versorgungsstellung 1000N (gestrichelt dargestellt) befände, wodurch die Nebenversorgungsschnittstelle 1021' für den Haupt-Werkzeugakku 10 mechanisch gesperrt wäre.

### Bezugszeichenliste

- 10: Haupt-Werkzeugakku
- 11: Hauptladeschnittstelle
- 11': Hauptakkuschnittstelle
- 21: erste Nebenladeschnittstelle
- 21': erste Nebenakkuschnittstelle
- 31: zweite Nebenladeschnittstelle
- 31': zweite Nebenakkuschnittstelle
- 70: Ladeelektronik
- 71: Verbindungskabel
- 73: Sensor
- 90: Ladergehäuse
- 95: Anschlussseite
- 100: Akku-Ladegerät
- 1000: Handwerkzeugmaschine
- 1011': Hauptversorgungsschnittstelle
- 1021': erste Nebenversorgungsschnittstelle
- 1080: Akku-Aufnahmebucht
- 1090: Werkzeuggehäuse
- N: Ladestellung
- N': Ruhestellung
- 1000N: Versorgungsstellung
- 1000N': Ruhestellung
- P: Bewegungspfad

## Patentansprüche

1. Netzbetriebenes Akku-Ladegerät (100) mit einem Ladergehäuse (90), das eine zum Anschluss eines Haupt-Werkzeugakkus (10) einer Handwerkzeugmaschine (1000) ausgebildete Hauptladeschnittstelle (11) aufweist, die an einer Anschlussseite (95) des Ladergehäuse (90) angeordnet ist,
**dadurch gekennzeichnet, dass** das Akku-Ladegerät (100) wenigstens eine auf der Anschlussseite (95) des Ladergehäuse (90) angeordnete Nebenladeschnittstelle (21, 31) aufweist, die derart zwischen einer Ladestellung (N) und einer Ruhestellung (N') verlagerbar ausgebildet ist, dass ein Neben-Werkzeugakku (20, 30) an der Nebenladeschnittstelle (21, 31) anschließbar ist, wenn sich die Nebenladeschnittstelle (21, 31) in der Ladestellung (N) befindet.

2. Akku-Ladegerät (100) nach Anspruch 1,
**dadurch gekennzeichnet, dass** die Hauptladeschnittstelle (11) mechanisch gegen den Anschluss des Haupt-Werkzeugakkus (10) gesperrt ist, wenn sich die Nebenladeschnittstelle (21, 31) in der Ladestellung (N) befindet und/oder die Hauptladeschnittstelle (11) mechanisch zum Anschluss des Haupt-Werkzeugakkus (10) freigegeben ist, wenn sich die Nebenladeschnittstelle (21, 31) in der Ruhestellung (N') befindet.

3. Akku-Ladegerät (100) nach Anspruch 1 oder 2,
**dadurch gekennzeichnet, dass** die Hauptladeschnittstelle (11) als Ladebuchse ausgebildet ist.

4. Akku-Ladegerät (100) nach einem der vorangehenden Ansprüche,
**dadurch gekennzeichnet, dass** die Nebenladeschnittstelle (21, 31) als zwischen der Ladestellung (N) und der Ruhestellung (N') verschiebbares Schwert ausgebildet ist, das in der Ladestellung (N) von der Anschlussseite (95) des Ladergehäuse (90) abragt.

5. Akku-Ladegerät (100) nach einem der vorangehenden Ansprüche,
**dadurch gekennzeichnet, dass** eine Ladeelektronik (70) umfasst ist, die innerhalb des Ladergehäuses (90) angeordnet und ausgebildet ist, den über die Hauptladeschnittstelle (11) anzuschließenden Haupt-Werkzeugakku (10) mit einer Haupt-Ladekonfiguration und den über die der Nebenladeschnittstelle (21, 31) anzuschließenden Neben-Werkzeugakku (20, 30) mit einer Neben-Ladekonfiguration zu laden.

6. Akku-Ladegerät (100) nach einem der vorangehenden Ansprüche,
**dadurch gekennzeichnet, dass** ein Sensor (73) umfasst ist, der ausgebildet und angeordnet ist zu Sensieren, ob die Nebenladeschnittstelle (21, 31) in der Ladestellung (N) oder der Ruhestellung (N') befindlich ist.

7. Akku-Ladegerät (100) nach einem der vorangehenden Ansprüche,
**dadurch gekennzeichnet, dass** die Ladeelektronik (70) ausgebildet die Ladekonfigurationen in Abhängigkeit vom Sensor umzuschalten.

8. Akku-Ladegerät (100) nach einem der vorangehenden Ansprüche,
**dadurch gekennzeichnet, dass** die zur Aufnahme des Haupt-Werkzeugakkus (10) ausgebildete Hauptladeschnittstelle (11) und die mit einem Neben-Werkzeugakku (20, 30) verbindbare Nebenladeschnittstelle (21, 31) mechanisch verschieden kodiert sind, wobei Haupt-Werkzeugakku (10) und Neben-Werkzeugakku (20, 30) bevorzugt verschiedenen Typs sind.

9. Ladesystem (500) mit einem netzbetriebenen Akku-Ladegerät (100) nach einem der vorangehenden Ansprüche und einem Haupt-Werkzeugakku (10) zu dessen Anschluss die Hauptladeschnittstelle (11) des netzbetriebenen Akku-Ladegerät (100) ausgebildet ist, sowie mit einem Neben-Werkzeugakku (20, 30) zu dessen Anschluss die Nebenladeschnittstelle (21, 31) ausgebildet ist.

10. Handwerkzeugmaschine (1000), insbesondere Bohrhammer oder Kombihammer, mit einem Werkzeugehäuse (1090) in dessen Akku-Aufnahmebucht (1080) eine zum Anschluss eines Haupt-Werkzeugakkus (10) ausgebildete Hauptversorgungsschnittstelle (1011') angeordnet ist,
**dadurch gekennzeichnet, dass** in der Aufnahmebucht (1080) eine zum bedarfweisen Anschließen eines Neben-Werkzeugakkus (20) ausgebildete Nebenversorgungsschnittstelle (1021') angeordnet ist, die derart zwischen einer Versorgungsstellung (1000N) und einer Ruhestellung (1000N') verlagerbar ausgebildet ist, dass der Neben-Werkzeugakku (20) an der Nebenversorgungsschnittstelle (1021') anschließbar ist, wenn sich die Nebenversorgungsschnittstelle (1021) in der Versorgungsstellung (1000N) befindet.
